# EUROPÄISCHE PATENTSCHRIFT

(11) **EP 1 983 493 B1**
(45) Veröffentlichungstag und Bekanntmachung des Hinweises auf die Patenterteilung: **16.05.2012**
(21) Anmeldenummer: 08006818.2
(22) Anmeldetag: 03.04.2008
(51) Int. Cl.: G07G 1/00, G07G 1/14

(54) **Ladenwaage zum Abwickeln von Verkäufen**
Shop scale for processing purchases
Balance de magasin pour régler des achats

(30) Priorität: 18.04.2007 DE 102007018327
(43) Veröffentlichungstag der Anmeldung: 22.10.2008
(73) Patentinhaber: Bizerba GmbH & Co. KG, 72336 Balingen (DE)
(72) Erfinder: Geisel, Alfred, 78564 Wehingen (DE); Leu, Martin, Dr., 72336 Balingen (DE)
(74) Vertreter: Manitz, Finsterwald & Partner GbR

(56) Entgegenhaltungen:
- DE-U1- 29 924 679
- US-A- 5 839 104
- US-A1- 2002 077 830
- US-A1- 2003 126 013
- US-A1- 2003 132 298
- US-A1- 2007 067 203

## Beschreibung

Die vorliegende Erfindung betrifft eine Ladenwaage zum Abwickeln von Verkäufen von Artikeln eines Warensortiments an einen Kunden.

Ladenwaagen werden beispielsweise an Frischetheken für Wurst, Fleisch, Käse oder Fisch in Ladengeschäften oder Supermärkten verwendet, um einen von einem Kunden gewünschten Artikel abzuwiegen. Bei einem Bedienvorgang teilt der Kunde dem Verkäufer den gewünschten Artikel sowie die gewünschte Menge oder das gewünschte Gewicht mit. Nachdem der Verkäufer den Artikel entsprechend dem Kundenwunsch abgezählt oder portioniert hat, wird der Artikel auf die Ladenwaage gelegt und eine dem Artikel zugeordnete Identifikationsnummer, welche auch als PLU bezeichnet wird, in die Ladenwaage eingegeben. Daraufhin werden dem Kunden das Gewicht und der Preis des abgewogenen Artikels angezeigt.

Die Ladenwaage ist bis zur Eingabe der PLU durch den Verkäufer, d.h. während der längsten Zeit des Bedienvorgangs, untätig. Der Kunde wird lediglich ganz am Ende des Bedienvorgangs mit Gewichts- und Preisinformation über den abgewogenen Artikel versorgt.

US 5,839,104 beschreibt einen Point-of-sale (POS) mit einer Waage. Der POS umfasst ferner ein Mikrofon zum Aufnehmen gesprochener Worte und eine Spracherkennung, die die gesprochenen Worte mit in einer Datenbank gespeicherten Worten vergleicht. Beispielsweise kann ein Verkäufer, der den Namen einer bestimmten Apfelsorte nicht kennt, über das Mikrofon den Begriff "Apfel" eingeben und bekommt dann ein Menü mit einer Auswahl der verschiedenen Apfelsorten angezeigt.

US 2003/0126013 A1 beschreibt eine elektronische Reklametafel, in deren Nähe Mikrofone angeordnet sind, um über Spracherkennung die Unterhaltung vor der Reklametafel befindlicher Personen auszuwerten. Hierzu werden die Gespräche in Text umgewandelt und mit Schlüsselwörtern verglichen. Sofern in dem Text Schlüsselwörter aufgefunden werden, wird eine entsprechende, in einer Datenbank gespeicherte Information ausgegeben.

Der Erfindung liegt die Aufgabe zugrunde, eine Ladenwaage der eingangs genannten Art anzugeben, deren Nutzen für den Kunden über die Ausgabe einer Gewichts- und Preisinformation am Ende eines Bedienvorgangs hinausgeht.

Diese Aufgabe wird durch eine Ladenwaage mit den Merkmalen des Anspruchs 1 gelöst, und insbesondere durch eine Ladenwaage mit einer Mikrofoneinrichtung zum Mithören eines Gesprächs zwischen einem Kunden und einem Verkäufer zur Umwandlung zusammenhängend gesprochener Worte des Gesprächs in ein elektrisches Sprachsignal, einer Spracherkennungseinrichtung zur Erzeugung eines die Worte repräsentierenden Spracherkennungsergebnisses aus dem elektrischen Sprachsignal, einer Vergleichseinrichtung zum Vergleichen des Spracherkennungsergebnisses mit in einer Speichereinrichtung der Ladenwaage hinterlegten Schlüsselwörtern zur Schlüsselworterkennung in dem Spracherkennungsergebnis, wobei wenigstens einige der hinterlegten Schlüsselwörter Produktbezeichnungen sind, welche eine Gruppe von Schlüsselwörtern definieren, und einer Steuereinrichtung, welche dazu ausgelegt ist, bei Auffinden eines der Gruppe zugehörigen Schlüsselwortes und/oder einer zulässigen Kombination von Schlüsselwörtern, welche ein der Gruppe zugehöriges Schlüsselwort umfasst, eine dem aufgefundenen Schlüsselwort oder der aufgefundenen zulässigen Kombination zugeordnete, über eine Datenquelle verfügbare Information oder ein Angebot zur Ausgabe der Information, insbesondere in Form eines Auswahlmenüs, mittels einer Ausgabeeinrichtung der Ladenwaage auszugeben.

Bei der erfindungsgemäßen Ladenwaage handelt es sich um eine Ladenwaage der eingangs genannten Art, welche durch eine Spracherkennung und Sprachsteuerung weitergebildet ist. Verfahren, Software und Vorrichtungen zur Spracherkennung sind aus dem Stand der Technik grundsätzlich bekannt. Die Spracherkennung ist bevorzugt sprecherunabhängig.

Als Eingabemedium wird die Mikrofoneinrichtung verwendet, insbesondere ein herkömmliches Mikrofon, welches das Gespräch zwischen dem Kunden und dem Verkäufer mithört und in das elektrische Sprachsignal umwandelt, welches dann mittels der Spracherkennungseinrichtung zu dem Spracherkennungsergebnis, üblicherweise einem Text, verarbeitet wird. In der Speichereinrichtung, beispielsweise einer Festplatte und/ oder einem Flash-Speicher der Ladenwaage, sind die verschiedenen Schlüsselwörter hinterlegt. Mittels der Vergleichseinrichtung kann dann ein "keyword spotting" durchgeführt werden, um in dem Spracherkennungsergebnis enthaltene Schlüsselwörter aufzufinden.

Enthält das Spracherkennungsergebnis eine Produktbezeichnung kann mittels der Steuereinrichtung eine der Produktbezeichnung zugeordnete Information, welche über die Datenquelle verfügbar ist, beispielsweise ein Herkunftshinweis, die Zusammensetzung des Produkt, Allergie auslösende Inhaltsstoffe, Rezepte, Information zu ergänzenden Produkten oder Werbung ausgegeben werden.

Bei einer Produktbezeichnung kann es sich um eine Bezeichnung für eine Warengruppe, beispielsweise "Salami", oder um eine Artikelbezeichnung, welcher eine PLU zugeordnet ist, beispielsweise "Mailänder Salami", handeln.

Es ist jedoch auch denkbar, dass die zugeordnete Information nicht unmittelbar ausgegeben wird, sondern zunächst lediglich zur Ausgabe angeboten wird. Beispielsweise kann ein Auswahlmenü ausgegeben werden, welches es erlaubt, die Art der auszugebenden Information anzugeben.

Alternativ und/ oder zusätzlich kann die Information oder das Angebot zur Ausgabe der Information auch oder nur dann ausgegeben werden, wenn eine Kombination von Schlüsselwörtern aufgefunden wird, wobei ein Schlüsselwort der Kombination eine Produktbezeichnung ist. Bevorzugt sind nicht alle Kombinationen von Schlüsselwörtern zugelassen, so dass beispielsweise vorgesehen werden kann, dass eine Kombination von zwei Produktbezeichnungen zu keinerlei Ausgabe führt.

Die erfindungsgemäße Ladenwaage besitzt den Vorteil, dass die zugeordnete Information bereits zu Beginn des Bedienvorgangs ausgegeben oder zur Ausgabe bereitgestellt werden kann, und zwar noch bevor der Verkäufer eine Identifikationsnummer in die Ladenwaage eingibt. Der Kunde kann folglich während der Wartezeit bis zur Eingabe der Identifikationsnummer mit produktbezogener Information, insbesondere Werbung, versorgt werden.

Nach einer Ausgestaltung der Erfindung umfasst die zulässige Kombination ein Schlüsselwort einer weiteren Gruppe von Schlüsselwörtern, deren Schlüsselwörter keine Produktbezeichnungen sind. Beispielsweise kann es sich bei den Schlüsselwörtern der weiteren Gruppe um Mengen- oder Gewichtsangaben handeln. Hierdurch kann die Ausgabe einer einer Produktbezeichnung zugeordneten Information in den Fällen vermieden werden, in denen die Produktbezeichnung außerhalb eines Verkaufsvorgangs und/oder rein zufällig geäußert wird.

Die Steuereinrichtung ist dazu ausgelegt, die Information oder das Angebot zur Ausgabe der Information nur dann auszugeben, wenn das Schlüsselwort oder die zulässige Kombination innerhalb eines vorgegebenen Zeitfensters erkannt wird. Hierdurch kann ein unbeabsichtigtes Ausgeben von Information ebenfalls wirksam vermieden werden.

Die Steuereinrichtung ist dazu ausgelegt, das vorgegebene Zeitfenster bei Erkennen eines einer entsprechenden Gruppe von Schlüsselwörtern zugehörigen Schlüsselworts oder bei Erkennen einer einer entsprechenden Gruppe von zulässigen Kombinationen von Schlüsselwörtern zugehörigen zulässigen Kombinationen zu aktivieren. Beispielsweise könnte die Kombination "Sie wünschen" zur Aktivierung des Zeitfensters verwendet werden.

Nach einer anderen Ausgestaltung der Erfindung ist die Spracherkennungseinrichtung dazu ausgelegt, zwischen Äußerungen des Kunden und Äußerungen des Verkäufers zu unterscheiden. Dies wird insbesondere dadurch ermöglicht, dass der Ladenwaage die Stimmen des oder der Verkäufer eingelernt werden. Hierdurch kann beispielsweise erreicht werden, dass die Aktivierung des vorgegebenen Zeitfensters lediglich durch einen Verkäufer möglich ist.

Nach einer anderen Ausgestaltung der Erfindung ist die Spracherkennungseinrichtung dazu ausgelegt, das Alter und/oder Geschlecht des Kunden zu erkennen. Dies ermöglicht beispielsweise, die Käuferstruktur eines Produkts automatisch zu bestimmen.

Bevorzugt ist die Steuereinrichtung dazu ausgelegt, die Information oder das Angebot zur Ausgabe der Information in Abhängigkeit von dem Alter und/oder Geschlecht des Kunden zu wählen. Hierdurch wird ermöglicht, auf den jeweiligen Kunden speziell zugeschnittene Information zu präsentieren.

Grundsätzlich ist es möglich, dass es sich bei der Ausgabeeinrichtung um eine Sprachausgabeeinrichtung handelt. Bevorzugt ist die Ausgabeeinrichtung jedoch als eine Sichtanzeigeeinrichtung, insbesondere ein Display, ausgebildet. Besonders bevorzugt ist es, wenn die Ausgabeeinrichtung als ein Touchscreen ausgebildet ist. Dies ermöglicht, dass der Kunde zwischen zur Auswahl gestellten Arten von Informationen durch Berührung der Sichtanzeigeeinrichtung auswählen kann.

Nach einer anderen Ausgestaltung der Erfindung ist die Datenquelle als eine Festplatte, ein Flash-Baustein und/oder ein Server ausgebildet. Der Server kann über ein Datenfernübertragungsnetz an die Ladenwaage angeschlossen sein.

Darüber hinaus ist Gegenstand der vorliegenden Erfindung ein Verfahren zum Betrieb einer Ladenwaage zum Abwickeln von Verkäufen von Artikeln eines Warensortiments an einen Kunden, gemäß den Merkmalen des Anspruchs 5.

Weiterer Gegenstand der Erfindung ist ein Computerprogramm mit Programmcode-Mitteln, um das erfindungsgemäße Verfahren durchzuführen, wenn das Programm auf einem Computer ausgeführt wird. Unter einem Computer wird dabei insbesondere auch jede Datenverarbeitungseinrichtung verstanden, die insbesondere einen Prozessor, einen Speicher und Schnittstellen zur Zuführung bzw. zur Abgabe von Daten aufweist. Insbesondere kann der Computer einen digitalen Signalprozessor aufweisen.

Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Computerprogramm auf einem Computer ausgeführt wird. Bei dem Datenträger kann es sich insbesondere um nichtflüchtige Speicher in Form von entsprechenden Halbleiterbauelementen, CDs, DVDs oder auch Disketten handeln.

Nicht beschränkende Ausführungsbeispiele der Erfindung sind in der Zeichnung dargestellt und werden nachfolgend beschrieben. Es zeigen,
- Fig. 1: ein Blockdiagramm einer erfindungsgemäßen Ladenwaage, und
- Fig. 2: eine Anzeige der Ladenwaage von Fig. 1.

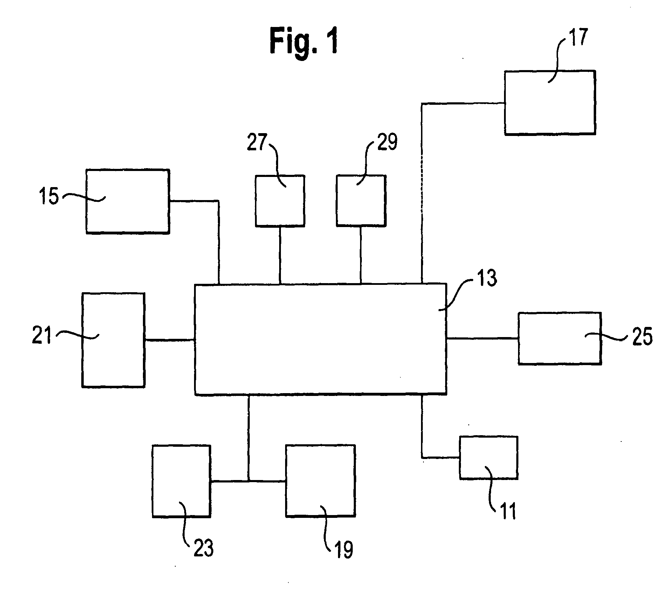

Die in Fig. 1 gezeigte Ladenwaage umfasst zunächst eine Wägezelle 21, welche das Gewicht eines auf ihr liegenden Artikels ermittelt und an eine Prozessoreinheit 13 weitergibt, welche dazu ausgelegt ist, das Gewicht des Artikels sowohl auf einer Anzeige 19 für den Kunden als auch auf einer Anzeige 23 für den Verkäufer anzuzeigen. Darüber hinaus ist eine an die Prozessoreinheit 13 angeschlossene Eingabeeinrichtung oder Tastatur 25 vorgesehen, über die eine dem Artikel zugeordnete Identifikationsnummer (PLU), in die Ladenwaage eingegeben werden kann, so dass über das Gewicht ein Preis für den Artikel berechnet werden kann, welcher dann ebenfalls auf den beiden Anzeigen 19, 23 angezeigt wird. Die Ladenwaage umfasst ferner ein Netzteil 29 zur Stromversorgung der Ladenwaage und einen Etikettendrucker 27.

Die vorstehend genannten Bauteile werden auch in herkömmlichen Ladenwaagen verwendet.

Die Prozessoreinheit 13 ist gleichzeitig als Spracherkennungseinrichtung, als Vergleichseinrichtung und als Steuereinrichtung ausgebildet, um mittels eines Mikrofons 11 detektierte Worte eines Gesprächs zwischen einem Kunden und einem Verkäufer mit auf einer Festplatte 15 der Ladenwaage gespeicherten Schlüsselwörtern zu vergleichen, um auf einem Server 17 verfügbare produktbezogene Information auf den Anzeigen 19, 23 darzustellen, wie nun nachstehend näher erläutert wird.

Ein Kunde tritt an eine Frischetheke eines Ladengeschäfts oder eines Supermarktes, beispielsweise an eine Fleisch- und Wursttheke, an der die vorstehend beschriebene Ladenwaage aufgestellt ist, und äußert gegenüber einem Verkäufer beispielsweise "Ich hätte gerne zwei mal Kalbskotelett". Das Mikrofon 11 der Ladenwaage, die dazu ausgelegt ist, das Gespräch zwischen dem Kunden und dem Verkäufer mitzuhören, wandelt die Worte des Kunden in ein elektrisches Sprachsignal um und gibt dieses an die Prozessoreinheit 13 weiter, welche eine Spracherkennung durchführt und folglich den Text "Ich hätte gerne zwei mal Kalbskotelett" erzeugt.

Anschließend vergleicht die Prozessoreinheit 13 diesen Text mit auf der Festplatte 15 gespeicherten Schlüsselwörtern, welche einer Gruppe von Schlüsselwörtern angehören, welche Produktbezeichnungen sind, wie beispielsweise "Schweinegulasch", "Schweinehals", "Kalbskotelett" oder "Wiener". Dieser Vorgang wird auch als "keyword spotting" bezeichnet. Im vorliegenden Fall wird in dem erzeugten Text das Schlüsselwort "Kalbskotelett" erkannt.

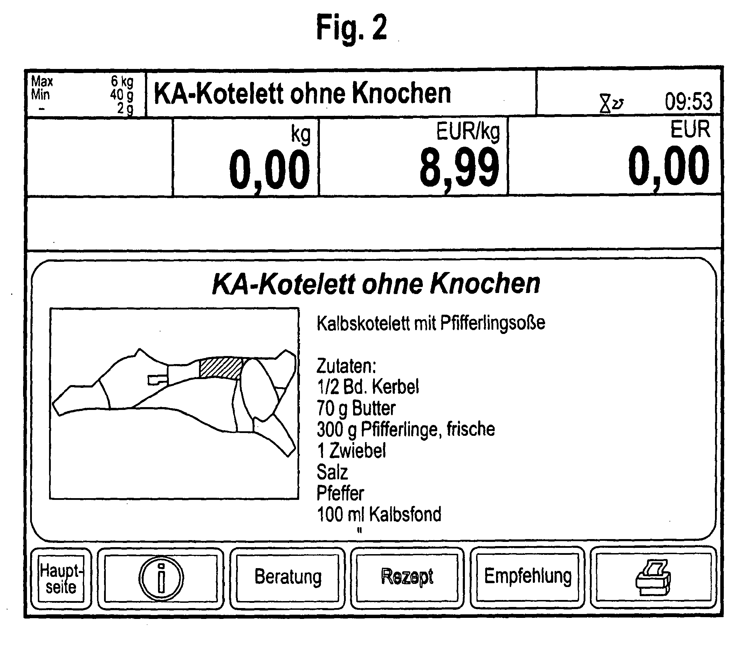

Nach Erkennen des Schlüsselwortes "Kalbskotelett" zeigt die Prozessoreinheit 13 beispielsweise ein Rezept zur Zubereitung eines Kalbskoteletts auf der Kundenanzeige 19 an, wie aus Fig. 2 erkennbar ist. Das Rezept kann auf der Festplatte 15 gespeichert oder aber von dem Server 17 bezogen werden, welcher sich beispielsweise in dem Ladengeschäft, dem Supermarkt, einer Filiale oder einer über ein Datenfernübertragungsnetz angebundenen Zentrale der Filiale befinden kann. Neben einem Rezept kann aber auch jede andere, Kalbskoteletts zugeordnete, auf der Festplatte 15 oder dem Server 17 hinterlegte Information auf der Kundenanzeige 19 angezeigt werden, wie beispielsweise ein Herkunftshinweis, "Cross-Selling"-Angebote, bei einem Kalbskotelett beispielsweise ein klassischer Rotwein, welcher ebenfalls in dem Ladengeschäft oder dem Supermarkt erhältlich ist, oder Hinweise zu Inhaltsstoffen oder Bestandteilen, welche allergische Reaktionen auslösen können.

Alternativ hierzu kann die Steuerung der Kundenanzeige 19 durch die Prozessoreinheit 13 auch derart ausgestaltet sein, dass nach Erkennen des Schlüsselwortes nicht unmittelbar eine der Produktbezeichnung zugeordnete Information, sondern eine Auswahl verschiedener Themenbereiche angezeigt wird, wobei der Kunde dann, beispielsweise über die Kundenanzeige 19, welche bevorzugt als Touchscreen ausgebildet ist, den gewünschten Themenbereich aus einem Menü auswählen kann. Bei den Themenbereichen kann es sich unter anderem beispielsweise um die bereits vorstehend aufgeführten Informationsarten handeln, d.h. Herkunftshinweise, "Cross-Selling"-Angebote oder Allergie-Beratung.

Insbesondere um die Robustheit der Spracherkennung zu erhöhen, kann die Prozessoreinheit 13 dazu ausgelegt sein, eine dem erkannten Produkt zugeordnete Information nicht bereits bei alleiniger Erkennung der Produktbezeichnung anzuzeigen, sondern nur in den Fällen, in denen die Produktbezeichnung gemeinsam mit wenigstens einem weiteren Schlüsselwort, welches in einer weiteren Gruppe von Schlüsselwörtern, die keine Produktbezeichnungen sind, wie beispielsweise Zahl- oder Mengenangaben wie "zwei", "Hundert", "Gramm", "Stück" oder "Paar", hinterlegt ist.

Im vorliegenden Fall werden in dem Text die beiden Schlüsselwörter "zwei" und "Kalbskotelett" erkannt, welche Kombination beispielsweise als eine zulässige Kombination definiert ist, so dass eine einem Kalbskotelett zugeordnete Information auf der Kundenanzeige 19 angezeigt wird. Würden in dem Text beispielsweise die beiden Schlüsselwörter "Wiener" und "Gramm" erkannt, welche Kombination beispielsweise als eine unzulässige Kombination definiert ist, fände keine Anzeige der Information auf der Kundenanzeige 19 statt, da dann eine gewisse Unsicherheit darüber bestünde, ob die Produktbezeichnung richtig erkannt wurde.

Die Spracherkennung erfolgt sprecherunabhängig. Allerdings sind der Ladenwaage die Stimme oder Stimmen des oder der Verkäufer eingelernt, so dass die Ladenwaage erkennen kann, ob der jeweils erzeugte Text von einem Kunden oder einem Verkäufer stammt.

Darüber hinaus ist die Ladenwaage in der Lage, das Alter und das Geschlecht des Kunden zu erkennen. Dies ist insbesondere deshalb von Vorteil, da dann eine auf den jeweiligen Kunden zugeschnittene Information auf der Kundenanzeige 19 dargestellt werden kann. Beispielsweise könnte einem männlichen Kunden zu einem Kalbskotelett anstelle eines klassischen Rotweins ein Bier oder einem Jugendlichen eine Barbecue-Soße angeboten werden.

Um eine Anzeige von produktbezogener Information auf der Kundenanzeige 19 zu vermeiden, wenn ein Verkaufsvorgang überhaupt nicht stattfindet, beispielsweise wenn sich zwei miteinander unterhaltende Kunden an der Ladenwaage vorbeigehen, wobei eher zufällig eine als Schlüsselwort hinterlegte Produktbezeichnung fällt, ist die Prozessoreinheit 13 dazu ausgelegt, die produktbezogene Information nur dann auszugeben, wenn das Schlüsselwort, welches eine Produktbezeichnung ist, oder eine Kombination von zulässigen Schlüsselwörtern innerhalb eines vorgegebenen Zeitfensters von beispielsweise einigen Sekunden nach einem Aktivierungszeitpunkt erkannt wird.

Das vorgegebene Zeitfenster wird bevorzugt zu einem Zeitpunkt aktiviert, zu dem ein Verkaufsvorgang beginnt, insbesondere für einen weiteren Artikel, beispielsweise dann, wenn der Verkäufer die Worte "Guten Tag, Sie wünschen?" oder "Darf es sonst noch etwas sein?" spricht. Diese Worte werden dann in den Text "Guten Tag, Sie wünschen" bzw. "Darf es sonst noch etwas sein" umgewandelt und mit einer dritten Gruppe von Schlüsselwörtern verglichen, wobei, wenn ein der dritten Gruppe zugehöriges Schlüsselwort in dem erzeugten Text aufgefunden wird, die Prozessoreinheit 13 dazu veranlassen wird, das vorgegebene Zeitfenster zu aktivieren. Bei dieser Gruppe von Schlüsselwörtern kann es sich beispielsweise um die Wörter "Guten", "Tag", "wünschen", "sonst", "noch" oder "etwas" handeln.

Allerdings kann die Prozessoreinheit 13 auch derart eingerichtet sein, dass das vorgegebene Zeitfenster nur dann aktiviert wird, wenn eine zulässige Kombination von Schlüsselwörtern erkannt wird, beispielsweise die Kombination der Wörter "Guten - Tag - wünschen" oder die Kombination der Wörter "sonst - noch - etwas", wobei es zusätzlich auch noch auf die Reihenfolge der Wörter in der jeweiligen zulässigen Kombination ankommen kann.

Die einer erkannten Produktbezeichnung zugeordnete Information ist zusammen mit der Gewichts- und Preisinformation des Produkts auf der Kundenanzeige 19 anzeigbar. Grundsätzlich kann für die produktbezogene Information aber auch eine separate Anzeige vorgesehen sein. Darüber hinaus ist es auch möglich, dass die produktbezogene Information lediglich dem Verkäufer angezeigt wird, welcher beispielsweise auf allergische Reaktionen auslösende Inhaltsstoffe des Produkts hingewiesen wird und den Kunden dann entsprechend informieren und beraten kann. In Fig. 1 sind eine Kundenanzeige 19 und eine Verkäuferanzeige 23 vorgesehen. Grundsätzlich ist es jedoch auch möglich, dass eine gemeinsame Anzeige für den Kunden und den Verkäufer vorhanden ist.

### Bezugszeichenliste

- 11: Mikrofon
- 13: Prozessoreinheit
- 15: Festplatte
- 17: Server
- 19: Kundenanzeige
- 21: Wägezelle
- 23: Verkäuferanzeige
- 25: Eingabeeinheit
- 27: Etikettendrucker
- 29: Netzteil

## Patentansprüche

1. Ladenwaage zum Abwickeln von Verkäufen von Artikeln eines Warensortiments an einen Kunden, mit
einer Mikrofoneinrichtung (11) zum Mithören eines Gesprächs zwischen einem Kunden und einem Verkäufer zur Umwandlung zusammenhängend gesprochener Worte des Gesprächs in ein elektrisches Sprachsignal,
einer Spracherkennungseinrichtung (13) zur Erzeugung eines die Worte repräsentierenden Spracherkennungsergebnisses aus dem elektrischen Sprachsignal,
einer Vergleichseinrichtung (13) zum Vergleichen des Spracherkennungsergebnisses mit in einer Speichereinrichtung (15) der Ladenwaage hinterlegten Schlüsselwörtern zur Schlüsselworterkennung in dem Spracherkennungsergebnis, wobei wenigstens einige der hinterlegten Schlüsselwörter Produktbezeichnungen sind, welche eine Gruppe von Schlüsselwörtern definieren, und
einer Steuereinrichtung (13), welche dazu ausgelegt ist, bei Auffinden eines der Gruppe zugehörigen Schlüsselwortes und/oder einer zulässigen Kombination von Schlüsselwörtern, welche ein der Gruppe zugehöriges Schlüsselwort umfasst, eine dem aufgefundenen Schlüsselwort oder der aufgefundenen zulässigen Kombination zugeordnete, über eine Datenquelle (17) verfügbare Information oder ein Angebot zur Ausgabe der Information, insbesondere in Form eines Auswählmenüs, mittels einer Ausgabeeinrichtung (19) der Ladenwaage auszugeben,
wobei die Steuereinrichtung (13) dazu ausgelegt ist, die Information oder das Angebot zur Ausgabe der Information nur dann auszugeben, wenn das Schlüsselwort oder die zulässige Kombination innerhalb eines vorgegebenen Zeitfensters erkannt wird, und
wobei die Steuereinrichtung (13) dazu ausgelegt ist, das vorgegebene Zeitfenster bei Erkennen eines einer entsprechenden Gruppe von Schlüsselwörtern zugehörigen Schlüsselwortes oder bei Erkennen einer einer entsprechenden Gruppe von zulässigen Kombinationen von Schlüsselwörtern zugehörigen zulässigen Kombination zu aktivieren.

2. Ladenwaage nach Anspruch 1,
**dadurch gekennzeichnet,**
**dass** die zulässige Kombination ein Schlüsselwort einer weiteren Gruppe von Schlüsselwörtern umfasst, deren Schlüsselwörter keine Produktbezeichnung sind.

3. Ladenwaage nach Anspruch 1 oder 2,
**dadurch gekennzeichnet,**
**dass** die Spracherkennungseinrichtung (13) dazu ausgelegt ist, zwischen Äußerungen des Kunden und Äußerungen des Verkäufers zu unterscheiden und/oder das Alter und/oder Geschlecht des Kunden zu erkennen.

4. Ladenwaage nach Anspruch 3,
**dadurch gekennzeichnet,**
**dass** die Steuereinrichtung (13) dazu ausgelegt ist, die Information oder das Angebot zur Ausgabe der Information in Abhängigkeit von dem Alter und/oder Geschlecht des Kunden zu wählen.

5. Verfahren zum Betrieb einer Ladenwaage zum Abwickeln von Verkäufen von Artikeln eines Warensortiments an einen Kunden, bei dem
ein Gespräch zwischen einem Kunden und einem Verkäufer mitgehört und zusammenhängend gesprochene Worte des Gesprächs in ein elektrisches Sprachsignal umgewandelt werden,
aus dem elektrischen Sprachsignal ein die Worte repräsentierendes Spracherkennungsergebnis erzeugt wird,
das Spracherkennungsergebnis mit hinterlegten Schlüsselwörtern verglichen wird, um Schlüsselwörter in dem Spracherkennungsergebnis zu erkennen, wobei wenigstens einige der hinterlegten Schlüsselwörter Produktbezeichnungen sind, welche eine Gruppe von Schlüsselwörtern definieren, und
bei Auffinden eines der Gruppe zugehörigen Schlüsselwortes und/oder einer zulässigen Kombination von Schlüsselwörtern, welche ein der Gruppe zugehöriges Schlüsselwort umfasst, eine dem aufgefundenen Schlüsselwort oder der aufgefundenen zulässigen Kombination zugeordnete Information oder ein Angebot zur Ausgabe der Information, insbesondere in Form eines Auswahlmenüs, ausgegeben wird,
wobei die Information oder das Angebot zur Ausgabe der Information nur dann ausgegeben wird, wenn das Schlüsselwort oder die zulässige Kombination innerhalb eines vorgegebenen Zeitfensters erkannt wird, und
wobei das vorgegebene Zeitfenster bei Erkennen eines einer entsprechenden Gruppe von Schlüsselwörtern zugehörigen Schlüsselwortes oder bei Erkennen einer einer entsprechenden Gruppe von zulässigen Kombinationen von Schlüsselwörtern zugehörigen zulässigen Kombination aktiviert wird.

6. Verfahren nach Anspruch 5,
**dadurch gekennzeichnet,**
**dass** die zulässige Kombination ein Schlüsselwort einer weiteren Gruppe von Schlüsselwörtern umfasst, deren Schlüsselwörter keine Produktbezeichnung sind.

7. Verfahren nach Anspruch 5 oder 6,
**dadurch gekennzeichnet,**
**dass** mittels der Spracherkennung zwischen Äußerungen des Kunden und Äußerungen des Verkäufers unterschieden und/oder das Alter und/oder Geschlecht des Kunden erkannt wird.

8. Verfahren nach Anspruch 7,
**dadurch gekennzeichnet,**
**dass** die Information oder das Angebot zur Ausgabe der Information in Abhängigkeit von dem Alter und/oder Geschlecht des Kunden gewählt wird.

9. Verfahren nach zumindest einem der Ansprüche 5 bis 8,
**dadurch gekennzeichnet,**
**dass** die Ausgabe der Information oder des Angebots zur Ausgabe der Information sichtbar angezeigt wird.

10. Computerprogramm mit Programmcode-Mitteln, um das Verfahren nach einem der Ansprüche 5 bis 9 durchzuführen, wenn das Programm auf einem Computer ausgeführt wird.

11. Computerprogrammprodukt mit Programmcode-Mitteln, die auf einem computerlesbaren Datenträger gespeichert sind, um das Verfahren nach einem der Ansprüche 5 bis 9 durchzuführen, wenn das Computerprogramm auf einem Computer ausgeführt wird.

## Claims

1. Shop scales for the processing of sales of articles of an assortment of goods to a customer, comprising
a microphone device (11) for listening to a conversation between a customer and a salesperson for the conversion of connected spoken words of the conversation into an electrical speech signal;
a speech recognition device (13) for the generation of a speech recognition result representing the words from the electrical speech signal;
a comparator (13) for the comparison of the speech recognition result with keywords stored in a memory device (15) of the shop scales for the keyword recognition in the speech recognition result, with at least some of the stored keywords being product names which define a group of keywords; and
a control device (13) which, on the finding of a keyword belonging to the group and/or of a permitted combination of keywords which includes a keyword belonging to the group, is configured to output an information associated with the found keyword or the found permitted combination and available via a data source (17) or to output an offer to output the information, in particular in the form of a selection menu, by means of an output device (19) of the shop scales,
wherein the control device (13) is configured only to output the information or the offer to output the information when the keyword or the permitted combination is recognized within a preset time window; and
wherein the control device (13) is configured to activate the preset time window on the recognition of a keyword belonging to a corresponding group of keywords or on the recognition of a permitted combination belonging to a corresponding group of permitted combinations of keywords.

2. Shop scales in accordance with claim 1, **characterized in that** the permitted combination includes a keyword of a further group of keywords whose keywords are not a product name.

3. Shop scales in accordance with claim 1 or claim 2, **characterized in that** the speech recognition device (13) is configured to differentiate between statements of the customer and statements of the salesperson and/or to recognize the age and/or the gender of the customer.

4. Shop scales in accordance with claim 3, **characterized in that** the control device (13) is configured to select the information or the offer to output the information in dependence on the age and/or gender of the customer.

5. A method for the operation of shop scales for the processing of sales of articles of an assortment of goods to a customer, wherein
a conversation between a customer and a salesperson is listened to and connected spoken words of the conversation are converted into an electrical speech signal;
a speech recognition result representing the words is generated from the electrical speech signal;
the speed recognition result is compared with stored keywords to recognize keywords in the speech recognition result, with at least some of the stored keywords being product names which define a group of keywords; and
on the finding of a keyword belonging to the group and/or of a permitted combination of keywords, which includes a keyword belonging to the group, an information associated with the found keyword or with the found permitted combination or an offer to output the information, in particular in the form of a selection menu, is output,
wherein the information or the offer to output the information is only output when the keyword or the permitted combination is recognized within a preset time window; and
wherein the preset time window is activated on the recognition of a keyword belonging to a corresponding group of keywords or on the recognition of a permitted combination belonging to a corresponding group of permitted combinations of keywords.

6. A method in accordance with claim 5, **characterized in that** the permitted combination includes a keyword of a further group of keywords whose keywords are not a product name.

7. A method in accordance with claim 5 or claim 6, **characterized in that** a distinction is made between statements of the customer and statements of the salesperson by means of the speech recognition and/or the age/and or gender of the customer is recognized by means of the speech recognition.

8. A method in accordance with claim 7, **characterized in that** the information or the offer to output the information is selected in dependence on the age and/or gender of the customer.

9. A method in accordance with at least one of the claims 5 to 8, **characterized in that** the output of the information or the offer to output the information is displayed visually.

10. A computer program with program code means to carry out the method in accordance with any one of the claims 5 to 9, when the program is carried out on a computer.

11. A computer program product with program code means which are stored on a computer readable data carrier to carry out the method in accordance with any one of the claims 5 to 9, when the computer program is carried out on a computer.

## Revendications

1. Balance de magasin pour le traitement de ventes d'articles d'un assortiment de produits à un client, comprenant
un dispositif à microphone (11) pour écouter une conversation entre un client et un vendeur et convertir des mots de la conversation énoncée en continu en un signal vocal électrique,
un système de reconnaissance vocale (13) pour engendrer un résultat de reconnaissance vocale représentant les mots à partir du signal vocal électrique,
un dispositif de comparaison (13) pour comparer le résultat de reconnaissance vocale avec des mots-clés enregistrés dans un dispositif à mémoire (15) de la balance de magasin en vue de reconnaître des mots-clés dans le résultat de reconnaissance vocale, dans lequel au moins quelques-uns des mots-clés mémorisés sont des désignations de produits qui définissent un groupe de mots-clés, et
un dispositif de commande (13) qui est conçu, lorsqu'il trouve un mot-clé appartenant au groupe et/ou d'une combinaison admissible de mots-clés qui incluent un mot-clé appartenant au groupe, pour délivrer au moyen d'un dispositif de présentation (19) de la balance de magasin une information associée au mot-clé trouvé ou à la combinaison admissible trouvée et disponible via une source de données (17), ou une offre pour la présentation de l'information, en particulier sous la forme d'un menu de sélection,
dans laquelle le dispositif de commande (13) est conçu pour délivrer l'information ou l'offre de présentation de l'information uniquement si le mot-clé ou la combinaison admissible a été reconnue à l'intérieur d'une fenêtre temporelle prédéterminée, et
dans laquelle le dispositif de commande (13) est conçu pour activer la fenêtre temporelle prédéterminée lors de la reconnaissance d'un mot-clé appartenant à un groupe correspondant de mots-clés ou lors de la reconnaissance d'une combinaison admissible appartenant à un groupe correspondant de combinaisons admissibles de mots-clés.

2. Balance de magasin selon la revendication 1,
**caractérisée en ce que** la combinaison admissible inclut un mot-clé d'un autre groupe de mots-clés dont les mots-clés ne sont pas des désignations de produits.

3. Balance de magasin selon la revendication 1 ou 2,
**caractérisée en ce que** le dispositif de reconnaissance vocale (13) est conçu pour faire une distinction entre des déclarations du client et des déclarations du vendeur et/ou pour reconnaître l'âge et/ou le sexe du client.

4. Balance de magasins selon la revendication 3,
**caractérisée en ce que** le dispositif de commande (13) est conçu pour choisir l'information ou l'offre de présentation d'informations en fonction de l'âge et/ou du sexe du client.

5. Procédé pour le fonctionnement d'une balance de magasin pour le traitement de vente d'articles d'un assortiment de produits à un client, dans lequel
une conversation entre un client et un vendeur est enregistrée et des mots de la conversation prononcée en continu sont convertis en un signal vocal électrique,
à partir du signal vocal électrique on engendre un résultat de reconnaissance vocale représentant les mots,
le résultat de reconnaissance vocale est comparé à des mots-clés mémorisés, afin de reconnaître des mots-clés dans le résultat de reconnaissance vocale, au moins quelques-uns des mots-clés mémorisés étant des désignations de produits qui définissent un groupe de mots-clés, et
lorsqu'on trouve un mot-clé appartenant au groupe et/ou une combinaison admissible de mots-clés qui incluent un mot-clé appartenant au groupe, on délivre une information associée au mot-clé trouvé ou à la combinaison admissible trouvée, ou une offre pour la présentation de l'information, en particulier sous la forme d'un menu de sélection,
dans lequel l'information ou l'offre de présentation de l'information n'est délivrée que si le mot-clé ou la combinaison admissible est reconnue à l'intérieur d'une fenêtre temporelle prédéterminée, et
dans lequel la fenêtre temporelle prédéterminée est activée lors de la reconnaissance d'un mot-clé appartenant à un groupe correspondant de mots-clés ou lors de la reconnaissance d'une combinaison admissible appartenant à un groupe correspondant de combinaisons admissibles de mots-clés.

6. Procédé selon la revendication 5,
**caractérisé en ce que** la combinaison admissible inclut un mot-clé d'un autre groupe de mots-clés dont les mots-clés ne sont pas des désignations de produits.

7. Procédé selon la revendication 5 ou 6,
**caractérisé en ce que**, au moyen de la reconnaissance vocale, on fait une distinction entre les déclarations du client et les déclarations du vendeur et/ou **en ce que** l'on reconnaît l'âge et/ou le sexe du client.

8. Procédé selon la revendication 7,
**caractérisé en ce que** l'information ou l'offre de présentation de l'information est choisie en fonction de l'âge et/ou du sexe du client.

9. Procédé selon l'une au moins des revendications 5 à 8,
**caractérisé en ce que** la délivrance de l'information ou de l'offre de présentation de l'information est indiquée de manière visible.

10. Programme d'ordinateur avec des moyens formant code de programme pour mettre en oeuvre le procédé selon l'une des revendications 5 à 9 quand le programme est exécuté sur un ordinateur.

11. Produit de programme d'ordinateur avec des moyens formant code de programme, mémorisé sur un support de données lisible à l'ordinateur pour mettre en oeuvre le procédé selon l'une des revendications 5 à 9 quand le programme d'ordinateur est exécuté sur un ordinateur.
